# EUROPEAN PATENT SPECIFICATION

(11) **EP 1 422 104 B1**
(45) Date of publication and mention of the grant of the patent: **26.09.2007**
(21) Application number: 03016536.9
(22) Date of filing: 23.07.2003
(51) Int. Cl.: B60N 2/427

(54) **Occupant protection system**
Insassenschutzeinrichtung
Système de protection de passager

(30) Priority: 21.11.2002 JP 2002338202
(43) Date of publication of application: 26.05.2004
(73) Proprietor: TAKATA CORPORATION, Minato-ku, Tokyo 106-8510 (JP)
(72) Inventor: Sakai, Katsuyuki, Minato-ku, Tokyo 106-8510 (JP); Nojiri, Keiichiro, Minato-ku, Tokyo 106-8510 (JP)
(74) Representative: Banzer, Hans-Jörg

(56) References cited:
- PATENT ABSTRACTS OF JAPAN vol. 1998, no. 13, 30 November 1998 (1998-11-30) -& JP 10 217818 A (IKEDA BUSSAN CO LTD), 18 August 1998 (1998-08-18)
- PATENT ABSTRACTS OF JAPAN vol. 2003, no. 01, 14 January 2003 (2003-01-14) -& JP 2002 264749 A (TAKATA CORP), 18 September 2002 (2002-09-18)
- PATENT ABSTRACTS OF JAPAN vol. 2000, no. 26, 1 July 2002 (2002-07-01) -& JP 2001 247010 A (TAKATA CORP), 11 September 2001 (2001-09-11) -& US 2001/011810 A1 (RYOJI SAIGUCHI ET AL.) 9 August 2001 (2001-08-09)
- PATENT ABSTRACTS OF JAPAN vol. 2003, no. 02, 5 February 2003 (2003-02-05) -& JP 2002 283901 A (JOHNSON CONTROLS AUTOMOTIVE SYSTEMS CORP), 3 October 2002 (2002-10-03)

## Description

### [Technical Field of the Invention]

The present invention relates to an occupant protection system for protecting an occupant of a vehicle such as a car in the event of a crash, and more specifically, it relates to an occupant protection system for restraining the lumbar part of the occupant during a front crash to prevent the body of the occupant from moving forward and downward.

### [Description of the Related Art]

Japanese Unexamined Patent Application Publication No. 2001-247010 discloses an occupant protection system for protecting an occupant in the event of a car crash, which heightens or hardens the front section of a seat cushion in the event of a crash in order to prevent a so-called submarine phenomenon such that an occupant passes under a lap belt during a front crash.

Figure 34 of the gazette describes that an airbag is placed between a left side frame and a right side frame and that a gas generator is disposed on the side of the side frame.

### [Problems to be Solved by the Invention]

The occupant protection system disclosed in Japanese Unexamined Patent Application Publication No. 2001-247010 needs multiple operations of mounting both ends of an airbag to left and right side frames and mounting a gas generator to the side frames when mounting the occupant protection system to a seat; thus, the work to mount the occupant protection system to the seat is extremely complicated.

An occupant protection system according to the preamble of independent claim 1 is known from Patent Abstracts of Japan Vol. 1989, No. 13, 30 November 1998, JP 10-217818 A. According to this occupant protection system, a seat pan is arranged below a seat cushion, an inflatable airbag is arranged above the seat pan for pushing the seat cushion from below, and a gas generator or inflator is arranged within the airbag for inflating the airbag in the case of an emergency. Since the gas generator is arranged within the airbag, a relatively large space is required for mounting the occupant protection system to the seat cushion and for providing the airbag module on the seat pan.

Accordingly, it is an object of the present invention to provide an occupant protection system that can easily be mounted to a seat.

### [Means for Solving the Problems]

According to the present invention, this object is achieved by an occupant protection system according to claim 1. The dependent claims define preferred and advantageous embodiments of the invention. The occupant protection system according to the present invention includes a seat pan arranged below a seat cushion; an inflatable airbag arranged above the seat pan for pushing the front section of the seat cushion from below; and a gas generator for inflating the airbag in an emergency. The airbag and the gas generator are mounted to the seat pan such that the gas generator is separate from the airbag.

The gas generator in arranged outside the airbag and connected to the airbag through a pipe.

With the occupant protection system of the invention, the airbag and the gas generator that make up the occupant protection system are both mounted to the seat pan. Accordingly, when mounting the occupant protection system to a seat, it is sufficient to mount the seat pan to which the airbag and the gas generator are fixed in advance below the seat cushion, and thus the occupant protection system can be remarkably easily mounted to the seat.

In the occupant protection system according to the invention, preferably, the airbag extends along the width direction of the seat pan, opposite ends of the airbag being connected to the seat pan. Extending the airbag along the width direction of the seat pan and connecting the opposite ends to the seat pan allows the airbag to be uniformly inflated between the both ends and the front section of the seat cushion to be uniformly pushed from below along the width direction.

In the occupant protection system according to the invention, the gas generator is preferably arranged along the upper surface or the lower surface of the seat pan. Arranging the gas generator along the upper surface of the seat pan facilitates the connection between the gas generator and the airbag. Arranging the gas generator along the lower surface of the seat pan increases the flexibility of the arrangement of the gas generator.

### [Brief Description of the Drawings]

Fig. 1 is a perspective view of a frame of a seat provided with an occupant protection system according to an embodiment of the present invention.
Fig. 2 is an exploded perspective view of the occupant protection system and the frame of Fig. 1.
Fig. 3 is a sectional view of Fig. 2, taken along line III-III.
Figs. 4(a) and 4(b) are perspective views of a frame of a seat provided with an occupant protection system according to another embodiment of the present invention.
Fig. 5 is a sectional view of Figs. 4(a) and 4(b), taken along line V-V.

### [Description of the Embodiments]

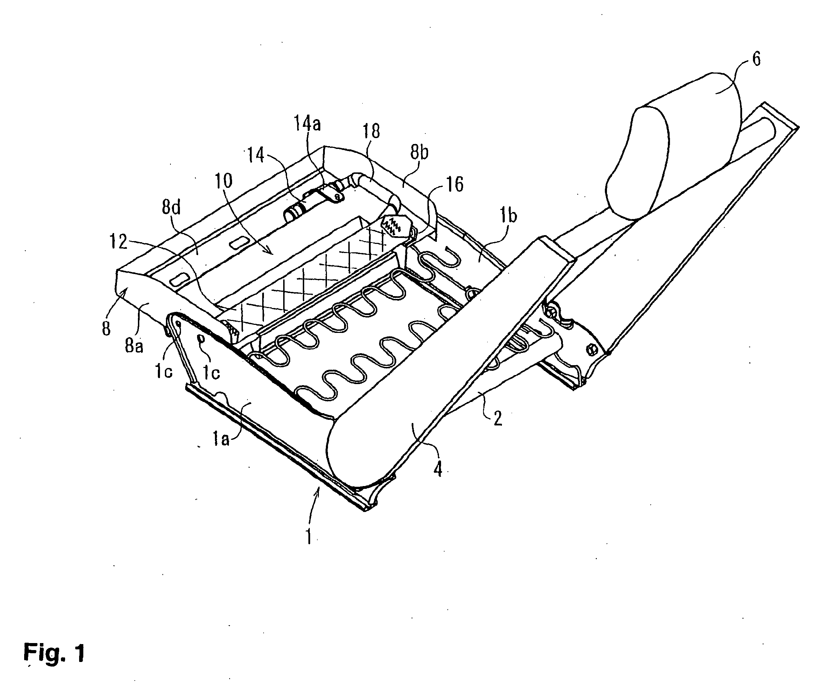

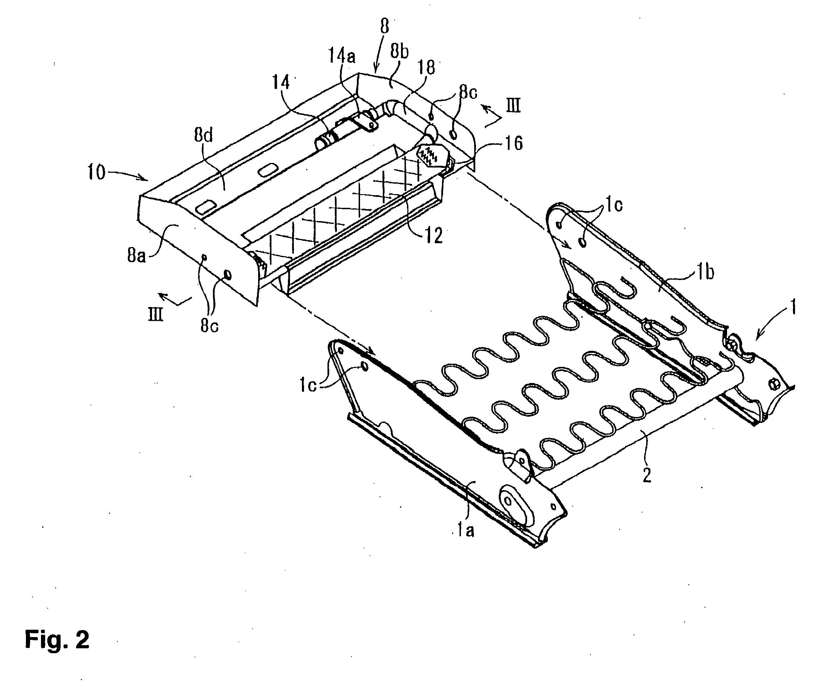

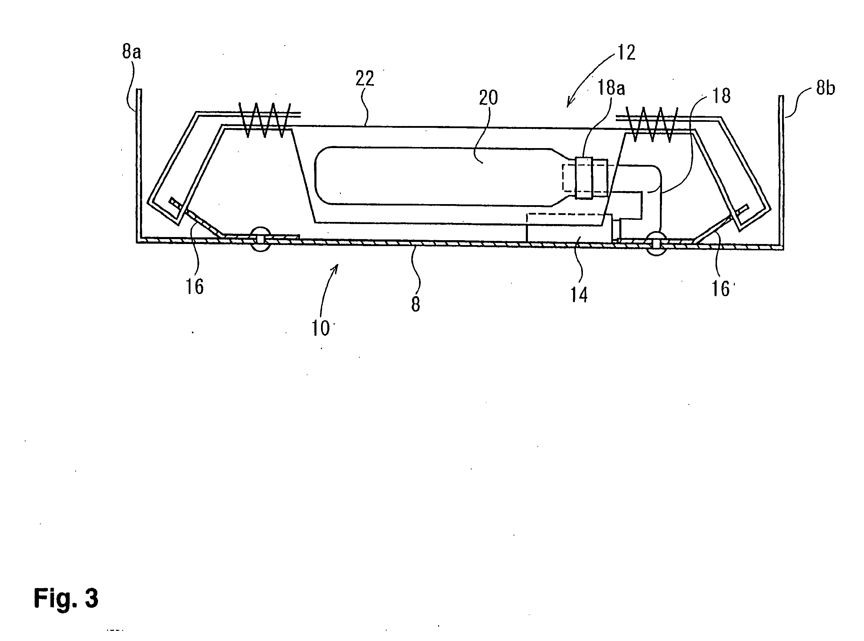

Embodiments of the present invention will be described hereinafter with reference to the drawings. Fig. 1 is a perspective view of a frame of a seat provided with an occupant protection system according to an embodiment of the present invention; Fig. 2 is an exploded perspective view of the occupant protection system and the frame; and Fig. 3 is a sectional view of Fig. 2, taken along line III-III.

The frame of the car seat includes a base frame 1 and a back frame 4 rotatably connected to the base frame 1 through a support shaft 2 and a reclining device (not shown). A headrest 6 is mounted on the top of the back frame 4.

The base frame 1 includes left and right side frames 1a and 1b. A seat pan 8 is placed between the front parts of the side frames 1a and 1b. Uprising side walls 8a and 8b are placed along the inner surfaces of the side frames 1a and 1b (opposite sides of the side frames 1a and 1b) on lateral both sides of the seat pan 8, respectively. The overlapping side frames 1a and 1b and the side walls 8a and 8b have fastening insertion holes 1c and 8c for inserting fastenings such as bolts and the like (not shown) therethrough, respectively.

The seat pan 8 is placed between the side frames 1a and 1b such that the side walls 8a and 8b overlap with the inner surfaces of the side frames 1a and 1b. The overlapping side walls 8a and 8b and the side frames 1a and 1b are fastened with bolts and nuts through the insertion holes 1c and 8c, so that the seat pan 8 is fixed between the side frames 1a and 1b.

A seat cushion and a seat back made of urethane and the like (not shown) are mounted to the base frame 1 and the back frame 4. The seat pan 8 is placed under the front section of the seat cushion.

An occupant protection system 10 includes the seat pan 8, an inflatable airbag 12 arranged above the seat pan 8 for pushing the front section of the seat cushion from below, and a gas generator 14 for inflating the airbag 12. The airbag 12 extends along the width direction of the seat pan 8; the laterally opposite ends of the airbag 12 are connected to the seat pan 8 through anchors 16 fixed to the upper surface of the seat pan 8. The gas generator 14 of the embodiment is cylindrical and is arranged along the upper surface of the seat pan 8, with the axis taken along the width direction of the seat pan 8. According to the embodiment, the front of the upper surface of the seat pan 8 is recessed into a recessed step 8d that is lower by a height from the upper surface of the gas generator 14, and the gas generator 14 is placed in the recessed step 8d. Reference numeral 14a of Fig. 1 denotes a bracket for fixing the gas generator 14 in the recessed step 8d.

The gas generator 14 is connected to the airbag 12 through a pipe 18. The pipe 18 is arranged along the upper surface of the seat pan 8.

According to the embodiment, referring to Fig. 3, the airbag 12 includes a cylindrical bag body 20 and a cylindrical mesh webbing 22 surrounding the bag body 20. The bag body 20 is in elongated folding body. The mesh webbing 22 is formed of knitting that freely extends radially but hardly extends longitudinally (along the width direction of the seat). Both ends of the mesh webbing 22 are connected to the anchors 16.

A first end of the pipe 18 is connected to a gas port of the gas generator 14 and a second end is inserted into the mesh webbing 22 from the first end of the mesh webbing 22, and is connected to an end of the airbag body 20 in the mesh webbing 22. Reference numeral 18a indicates a fastening for fastening the end of the bag body 20 to the pipe 18.

When mounting the occupant protection system 10 with such a structure to the seat, the airbag 12 and the gas generator 14 are mounted on the upper surface of the seat pan 8 and the gas generator 14 is connected to the airbag 12 through the pipe 18 into an occupant protection system assembly in advance. The occupant protection system assembly (seat pan 8) is disposed between the front parts of the side frames 1a and 1b of the seat which is assembled in another process and is then secured to the side frames 1a and 1b.

As described above, in the occupant protection system 10, the airbag 12 and the gas generator 14 that make up the occupant protection system 10 are fixed to the seat pan 8; accordingly, when mounting the occupant protection system 10 to the seat, it is sufficient to mount the seat pan 8 to which the airbag 12 and the gas generator 14 are fixed in advance between the side frames 1a and 1b, and thus the occupant protection system 10 can be remarkably easily mounted to the seat.

According to the embodiment, since the gas generator 14 is arranged along the upper surface of the seat pan 8, the mounting of the gas generator 14 to the seat pan 8 and the arrangement of the pipe 18 for connecting the gas generator 14 to the airbag 12 are easy.

The operation of the occupant protection system 10 will now be described.

When a front impact of a car is sensed, the gas generator 14 jets a gas. The gas from the gas generator 14 flows into the airbag 12 through the pipe 18 to inflate the airbag 12. As a result, the front section of the seat cushion is pushed up or hardened, thus preventing the forward movement of the lumbar part of the occupant.

According to the embodiment, the airbag 12 extends along the width direction of the seat pan 8 and the both ends are connected to the seat pan 8 through the anchors 16. Accordingly, the airbag 12 is uniformly inflated between the both ends, by which the front section of the seat cushion is uniformly pushed along the width direction.

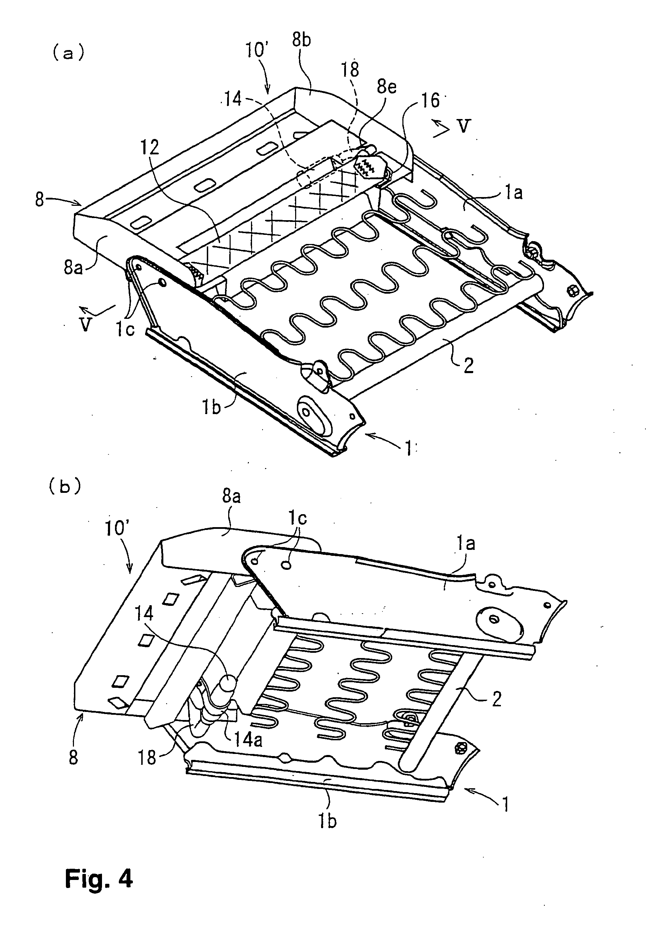

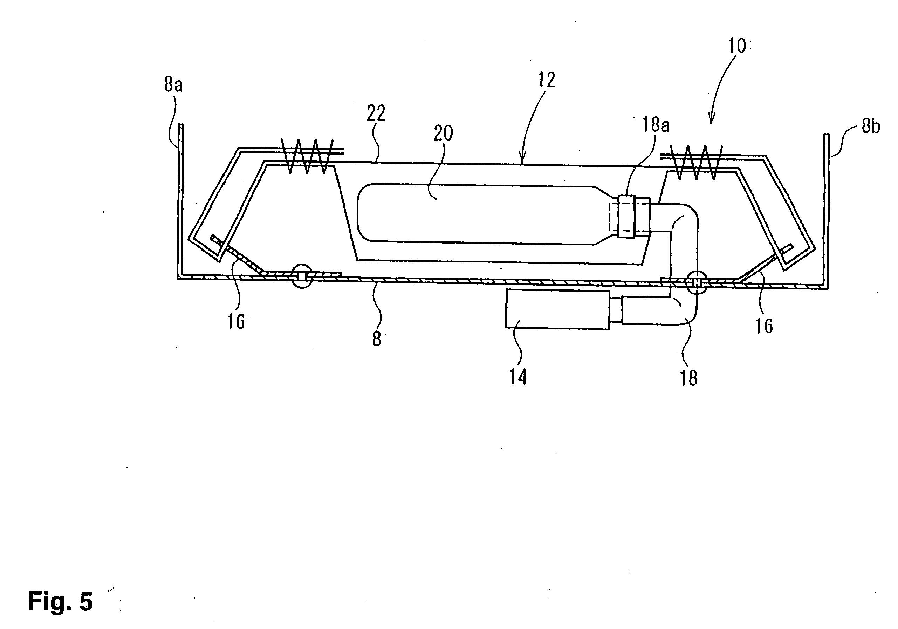

According to the embodiment, the gas generator 14 is arranged along the upper surface of the seat pan 8; however, the gas generator 14 may be arranged along the lower surface of the seat pan 8, as in an occupant protection system 10' of Figs. 4(a), 4(b), and 5. When the gas generator 14 is arranged along the lower surface of the seat pan 8, the gas generator 14 has a high degree of flexibility of arrangement. The arrangement of the gas generator relative to the seat pan is not limited to the upper surface and the lower surface of the seat pan.

Fig. 4(a) is a perspective view of a seat provided with an occupant protection system, viewed from diagonally above, according to another embodiment of the present invention; Fig. 4(b) is a perspective view of the seat seen from diagonally below; and Fig. 5 is a sectional view of the occupant protection system of Fig. 4(a), taken along line V-V.

In the occupant protection system 10' of Figs. 4(a), 4(b), and 5, the gas generator 14 is arranged along the lower surface of the seat pan 8, with the axis taken along the width direction of the seat pan 8. The airbag 12 is arranged above the upper surface of the seat pan 8. The seat pan 8 has an opening 8e for inserting a pipe 18 (refer to Fig. 4(a)), through which the pipe 18 is placed from the lower surface of the seat pan 8 to the upper surface. The gas generator 14 is connected to the airbag 12 through the pipe 18.

Other arrangements of the occupant protection system 10' are the same as those of the occupant protection system 10 in Figs. 1 to 3, and the same reference numerals are given to components with the same functions.

The above-described embodiments are only examples of the invention and the invention is not limited to the embodiments.

### [Advantages]

As described above, the invention provides an occupant protection system that can be mounted to a seat remarkably easily.

## Claims

1. An occupant protection system (10; 10'), comprising:
a seat pan (8) arranged below a seat cushion;
an inflatable airbag (12) arranged above the seat pan (8) for pushing the front section of the seat cushion from below; and
a gas generator (14) for inflating the airbag (12) in an emergency,
**characterized in that**
the airbag (12) and the gas generator (14) are mounted to the seat pan (8) such that the gas generator (14) is separate from the airbag (12),
wherein the gas generator (14) is connected to the airbag (12) through a pipe (18).

2. An occupant protection system (10; 10') according to Claim 1, wherein the airbag (12) extends along the width direction of the seat pan (8), opposite ends of the airbag (12) being connected to the seat pan (8).

3. An occupant protection system (10; 10') according to Claim 1 or 2, wherein the gas generator (14) is arranged along the upper surface or the lower surface of the seat pan (8).

## Patentansprüche

1. Insassenschutzsystem (10; 10'), umfassend:
eine Sitzschale (8), welche unter einem Sitzkissen angeordnet ist;
einen aufblasbaren Airbag (12) zum Drücken des Vorderabschnitts des Sitzkissens von unten, welcher über der Sitzschale (8) angeordnet ist; und
einen Gasgenerator (14) zum Aufblasen des Airbags (12) in einem Notfall,
**dadurch gekennzeichnet,**
**dass** der Airbag (12) und der Gasgenerator (14) an der Sitzschale (8) so angebracht sind, dass der Gasgenerator (14) von dem Airbag (12) separat ist,
wobei der Gasgenerator (14) mit dem Airbag (12) über eine Rohrleitung (18) verbunden ist.

2. Insassenschutzsystem (10; 10') nach Anspruch 1, wobei sich der Airbag (12) entlang der Breitenrichtung der Sitzschale (8) erstreckt, wobei entgegengesetzte Enden des Airbags (12) mit der Sitzschale (8) verbunden sind.

3. Insassenschutzsystem (10; 10') nach Anspruch 1 oder 2, wobei der Gasgenerator (14) entlang der oberen Oberfläche oder der unteren Oberfläche der Sitzschale (8) angeordnet ist.

## Revendications

1. Système (10; 10') de protection de passager, comprenant:
- un plateau (8) de siège installé sous un coussin de siège;
- un coussin gonflable (12) installé au-dessus du plateau (8) de siège pour pousser la section avant du coussin de siège depuis le dessous ; et
- un générateur (14) de gaz pour gonfler le coussin gonflable (12) en cas d'urgence,
**caractérisé en ce que**
- le coussin gonflable (12) et le générateur (14) de gaz sont montés sur le plateau (8) de siège de façon que le générateur (14) de gaz soit séparé du coussin gonflable (12),
dans lequel le générateur (14) de gaz est connecté au coussin gonflable (12) par l'intermédiaire d'un tube (18).

2. Système (10; 10') de protection de passager selon la revendication 1, dans lequel le coussin gonflable (12) s'étend le long du sens de la largeur du plateau (8) de siège, les extrémités opposées du coussin gonflable (12) étant connectées au plateau (8) de siège.

3. Système (10; 10') de protection de passager selon la revendication 1 ou la revendication 2, dans lequel le générateur (14) de gaz est installé le long de la surface supérieure ou de la surface inférieure du plateau (8) de siège.
